# EUROPÄISCHE PATENTSCHRIFT

(11) **EP 1 086 519 B1**
(45) Veröffentlichungstag und Bekanntmachung des Hinweises auf die Patenterteilung: **18.09.2002**
(21) Anmeldenummer: 99939328.3
(22) Anmeldetag: 10.06.1999
(51) Int. Cl.: H02G 5/06

(54) **ISOLIERENDES BAUTEIL FÜR HOCHSPANNUNGSANLAGEN UND VERFAHREN ZU SEINER HERSTELLUNG**
INSULATING COMPONENT FOR HIGH-VOLTAGE INSTALLATIONS AND A METHOD FOR THE PRODUCTION THEREOF
COMPOSANT ISOLANT POUR INSTALLATIONS HAUTE TENSION, ET SON PROCEDE DE PRODUCTION

(30) Priorität: 10.06.1998 DE 19826202
(43) Veröffentlichungstag der Anmeldung: 28.03.2001
(73) Patentinhaber: SIEMENS AKTIENGESELLSCHAFT, 80333 München (DE)
(72) Erfinder: ZIELKE, Eberhard, D-12161 Berlin (DE)
(86) Internationale Anmeldenummer: DE9901747
(87) Internationale Veröffentlichungsnummer: WO99065128

(56) Entgegenhaltungen:
- SCMUNK, MILLER, BECKER: "TESTS ON IRRADIATED INSULATOR MATERIALS" JOURNAL OF NUCLEAR MATERIAL, Bd. 123, 1984, Seiten 1381-1385, XP000852523

## Beschreibung

Die Erfindung bezieht sich auf ein isolierendes, wenigstens teilweise aus einem Kunststoff bestehendes Bauteil für Hochspannungsanlagen, insbesondere zum Einsatz in gasisolierten Anlagen mit einer im Bereich seiner Oberfläche erhöhten Leitfähigkeit sowie auf ein Verfahren zur Herstellung eines derartigen Bauteils.

Ein isolierendes Bauteil ist beispielsweise aus der DE-PS 26 26 855 bekannt. Solche Isolierstoffbauteile werden beispielsweise in elektrischen Hochspannungsschaltern, insbesondere in Hochspannungsleistungsschaltern als Abstandshalter oder als Düsen zur Führung einer Isoliergasströmung eingesetzt.

Aus der DE 26 25 071 A1 ist ein isolierendes Bauteil für Hochspannungsanlagen bekannt, bei dem Oberflächenbereiche durch implantierte Ionen mit einer erhöhten elektrischen Leitfähigkeit versehen sind.

In gekapselten Hochspannungsschaltanlagen werden solche Bauteile beispielsweise als Stützer für Sammelschienenleiter oder als Durchführungen eingesetzt. Sie können beispielsweise aus Gießharz zum Beispiel einem Epoxidharz bestehen oder aus PTFE (Polytetrafluoräthylen) oder einem ähnlichen Polymer.

Unter hoher dielektrischer Beanspruchung, das heißt bei großen elektrischen Feldstärken, insbesondere dann, wenn die Feldstärke eine Komponente tangential zur Oberfläche des Bauteils aufweist, besteht eine erhöhte Tendenz von Verschiebungsströmen an der Oberfläche des Bauteiles, die auch zu elektrischen Überschlägen führen kann. Solche Überschläge können dann größere Überschläge zwischen Leitern initiieren und müssen daher auf jeden Fall vermieden werden.

Gemäß der DE-PS 26 26 855 wird im Bereich der Oberfläche des Bauteils ein schwach leitfähiges Gewebe zur Ableitung von Oberflächenladungen eingebettet.

Aus der DE 195 19 992 A1 ist ein isolierendes Bauteil bekannt, das zur Ableitung von Oberflächenladungen eine erhöhte Oberflächenrauigkeit aufweist. Durch die erhöhte Oberflächenrauigkeit sind Unebenheiten vorhanden, die durch entsprechende Feldverzerrungen Spitzenentladungen gefördert. Hierdurch werden Ladungsträger emitiert und Oberflächenladungen abgebaut.

Zur Schaffung einer solchen Oberfläche ist gemäß dem Stand der Technik jedoch eine mechanische Bearbeitung der Oberflächen notwendig.

Der vorliegenden Erfindung liegt dagegen die Aufgabe zugrunde, ein isolierendes Bauteil der eingangs genannten Art zu schaffen, bei dem der Abbau von Oberflächenladungen begünstigt ist und das in einfacher Weise mit geringem Aufwand herzustellen und zu bearbeiten ist.

Die Aufgabe wird erfindungsgemäß dadurch gelöst, daß das Material des Bauteils in wenigstens einem Bereich seiner Oberfläche, in dem es im Betrieb einer höheren dielektrischen Belastung unterliegt als in anderen Bereichen, zur Erhöhung der Leitfähigkeit mit Beta- oder Gamma-Strahlung behandelt ist.

Die gute mechanische Stabilität und vor allem die guten Isolationseigenschaften der Kunststoffe, aus denen derartige isolierende Bauteile hergestellt sind, resultieren aus der Molekülstruktur, die eine große Anzahl langer Kohlenstoffketten aufweist. Diese Kohlenstoffketten bewirken ebenfalls einen hohen elektrischen Widerstand.

Durch die Maßnahme der Bestrahlung mit Beta- oder Gamma-Strahlung werden die Molekülketten im Eindringbereich der Strahlung zerstört. Hierdurch wird einerseits die mechanische Bearbeitbarkeit erleichtert, andererseits nimmt der spezifische elektrische Widerstand ab, so daß in diesem Bereich an der Oberfläche des isolierenden Bauteils Oberflächenladungen durch elektrische Leitung abgeführt werden können.

Versuche haben ergeben, daß die Abklingzeit für Oberflächenladungen durch eine derartige Behandlung von isolierenden Bauteilen erheblich verkürzt(halbiert) wird.

In dem Bereich eines isolierenden Bauteils, der während des Betriebs keinen erhöhten dielektrischen Belastungen ausgesetzt ist, erübrigt sich eine derartige Behandlung des Bauteils.

Eine vorteilhafte Ausgestaltung der Erfindung sieht vor, daß in dem wenigstens einen Bereich die Leitfähigkeit bis zu einer Tiefe von wenigstens 5 mm signifikant erhöht ist.

Durch eine derartige Behandlung des Materials bis in eine Tiefe von 5 mm, vorteilhaft auch etwa bis 10 mm, bleibt der Effekt eines verringerten Oberflächenwiderstandes erhalten, auch wenn nach Benutzung des Bauteils beispielsweise unter Einwirkung eines Lichtbogens ein Teil der Oberfläche abgetragen wird.

Dies ist insbesondere bei der Verwendung der Erfindung bei einer Isolierstoffdüse in der Unterbrechereinheit eines Hochspannungsleistungsschalters der Fall.

Bei der erfindungsgemäßen Ausgestaltung ist jedoch auch nach mehrmaligen Lastschaltungen die Oberfläche eines solchen Düsenkörpers nur teilweise abgetragen, so daß im Bereich erhöhter dielektrischer Belastung noch ein durch die Bestrahlung behandeltes und in seinem Widerstand verringertes Material verbleibt, welches evtl. vorhandene Oberflächenladungen abführt.

Eine weitere vorteilhafte Ausgestaltung der Erfindung sieht vor, daß das Bauteil aus PTFE besteht.

Die Herstellung von Isoliersotffbauteilen aus PTFE oder auch aus Gießharz ist branchenüblich und in den verschiedensten Formen durch Gießen oder Sintern ohne größeren Aufwand möglich.

Die Erfindung kann außerdem in einem Verfahren zur Herstellung eines isolierenden Bauteils bestehen, bei dem das Bauteil in dem wenigstens einen Bereich einer Alpha-, Beta- oder Gammastrahlung ausgesetzt wird.

Zusätzlich kann die Erfindung dadurch ausgestaltet sein, daß das Bauteil wenigstens in dem einen Bereich der Einwirkung eines Lichtbogens ausgesetzt wird.

Durch die unmittelbare Nähe eines Lichtbogens wird das Bauteil einer erhöhten Beta-Strahlung ausgesetzt, wodurch sich der gewünschte Effekt in Abhängigkeit von der Intensität und der Dauer der Lichtbogeneinwirkung einstellt. Diese Behandlung mit einem Lichtbogen kann entweder anstelle der systematischen Bestrahlung des Bauteils oder unterstützend vorgenommen werden. Das Bauteil kann insbesondere dann, wenn es sich um einen Düsenkörper für einen Hochspannungsleistungsschalter handelt, auch im eingebauten Zustand vor oder nach der Inbetriebnahme systematisch Lichtbögen ausgesetzt werden, um den erfindungsgemäßen Effekt zu erreichen. Als Lichtbogen bietet sich zu diesem Zweck der Schaltlichtbogen an.

Im folgenden wird die Erfindung anhand eines Ausführungsbeispiels in einer Zeichnung gezeigt und nachfolgend beschrieben.

Dabei zeigt
- Figur 1: schematisch im Längsschnitt einen Teil einer Unterbrechereinheit eines Hochspannungsleistungsschalters,
- Figur 2: einen scheibenförmigen Isolierstoffstützer im Querschnitt.

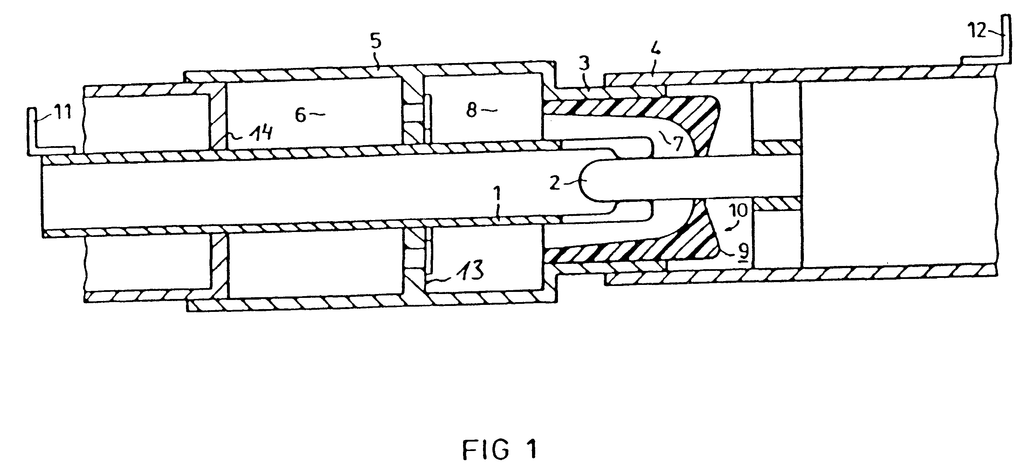

In der Figur 1 ist eine Unterbrechereinheit eines Hochspannungsleistungsschalters mit einem ersten, antreibbaren Lichtbogenkontaktstück 1 in Form eines Tulpenkontaktes und einem zweiten, insbesondere feststehenden pinförmigen Lichtbogenkontaktstück 2 dargestellt. Es kann auch vorgesehen sein, im Zuge einer Schaltbewegung beide Lichtbogenkontaktstücke 1,2 gegeneinander zu bewegen.

Mit dem ersten Lichtbogenkontaktstück 1 ist ein erstes, ebenfalls antreibbares Nennstromkontaktstück 3 verbunden, das mit einem feststehenden zweiten Nennstromkontaktstück 4 im Einschaltzustand zusammenwirkt.

Das antreibbare Lichtbogenkontaktstück 1 ist mit einem Zylinderboden 13 verbunden, der seinerseits mit einem Außenzylinder 5 verbunden ist. Der Außenzylinder 5 wirkt auf einen Teil seiner Länge als Kompressionszylinder, der bei der Ausschaltbewegung gegenüber einem feststehenden Kompressionskolben 14 eine Löschgaskompression in dem Kompressionsvolumen 6 bewirkt. Als Löschgas wird in einem derartigen Schalter üblicherweise Schwefelhexafluorid verwendet.

An einem dem feststehenden zweiten Lichtbogenkontaktstück 2 zugewandten Ende des Zylinders 5 umschließt dieser einen Heizraum 8, der mit dem Kompressionsraum 6 über Ventile in dem Zylinderboden 13 verbunden ist.

Der Heizraum 8 ist über einer. Kanal 7 mit dem Lichtbogenraum verbunden, der sich im Trennzustand zwischen den Lichtbogenkontaktstücken 1,2 befindet. Dort wird, wenn ein Lichtbogen gezogen wird, Löschgas erhitzt und expandiert, das darauf im Heizraum 8 gespeichert wird und nach einem Stromnulldurchgang zur Verhinderung einer Rückzündung von dort zum Lichtbogen zurückströmt.

Die beweglichen Kontaktstücke 1,3 sind mit einem Anschluß 11 auf der einen Seite der Unterbrechereinheit, die feststehenden Kontaktstücke 2,4 mit einem Anschluß 12 auf der anderen Seite der Unterbrechereinheit verbunden.

Zur Steuerung der Löschgasströmung zum Heizraum 8 und von dort zurück zum Lichtbogenraum und von dort durch die Schaltstrecke ist ein düsenförmiges isolierendes Bauteil 9 vorgesehen, das üblicherweise aus Polytetrafluoräthylen besteht.

Im Bereich seiner Stirnfläche 10 ist das Bauteil im Betrieb besonders hohen dielektrischen Belastungen ausgesetzt, insbesondere im Ausschaltzustand des Leistungsschalters, wenn die Stirnseite 10 dem feststehenden Lichtbogenkontaktstück 2 gegenübersteht. Das isolierende Bauteil 9 ist mit dem antreibbaren Nennstromkontakt 3 verbunden, der sich auf einem anderen Potential befindet als die Gegenkontakte 2,4. Hierdurch entsteht ein elektrisches Feld hoher Feldstärke. Dies kann beim Vorhandensein von Oberflächenladungen auf der Stirnseite 10 zu Verschiebungsströmen und Überschlägen führen, wenn dort Oberflächenladungen liegen. Solche Oberflächenladungen können sich langfristig auch im Einschaltzustand dort ansammeln, wenn das Material des isolierenden Bauteils 9 in diesem Bereich einen zu hohen elektrischen Widerstand aufweist.

Um dies zu verhindern, ist das isolierende Bauteil 9 im Bereich der Stirnseite 10 vor der Montage für eine definierte Zeit einer Bestrahlung durch Betastrahlen (Elektronenstrahlen) oder Gammastrahlen (kurzwellige elektromagnetische Strahlung) ausgesetzt worden. Durch den Einfluß dieser Strahlung wird die Molekülstruktur des Isolierstoffmaterials teilweise verändert, insbesondere werden lange Kohlenstoffketten zerstört. Dies führt zu einer Herabsetzung des elektrischen Widerstandes in dem Bereich, der der Bestrahlung ausgesetzt ist.

Durch die Energie der Strahlung (bei Betastrahlung die Teilchengeschwindigkeit, bei Gammastrahlung die Wellenlänge) kann die Eindringtiefe der jeweiligen Strahlung in das Material des isolierenden Bauteils gesteuert werden. Hierdurch kann bestimmt werden, bis in welche Tiefe von der Oberfläche aus sich der Bereich eines verringerten elektrischen Widerstandes erstreckt.

Durch die Intensität der Bestrahlung (das heißt durch die Teilchendichte bei Betastrahlung sowie die Strahlungsintensität bei Gammastrahlung) kann der Veränderungsgrad der Molekülstruktur in dem Material des isolierenden Bauteils beeinflußt werden und somit das Maß, in dem der elektrische Widerstand herabgesetzt wird.

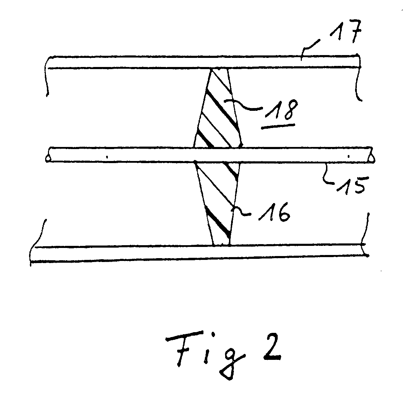

In der Figur 2 ist ein scheibenförmiger Isolierstützer 18 dargestellt, der in die Kapselung 17 einer SF₆-Schaltanlage eingebaut werden kann oder in einen gasisolierten Rohrleiter und der von einem Hochspannungsleiter 15 durchsetzt ist und diesen trägt. Der Isolierstoffstützer ist auf wenigstens einer seiner Seiten in der beschriebenen Weise bestrahlt worden und weist dort im Oberflächenbereich 16 einen entsprechend verringerten elektrischen Widerstand auf, um die Ansammlung von Oberflächenladungen zu verhindern. Dies kann insbesondere bei der Verwendung eines derartigen Isolierstützers bei der Übertragung von Gleichstrom vorteilhaft sein.

## Patentansprüche

1. Isolierendes, wenigstens teilweise aus einem Kunststoff bestehendes Bauteil (9,18) für Hochspannungsanlagen, insbesondere zum Einsatz in gasisolierten Anlagen, mit einer im Bereich seiner Oberfläche erhöhten Leitfähigkeit
**dadurch gekennzeichnet , daß**
das Material des Bauteils (9,18) in wenigstens einem Bereich (10,16) seiner Oberfläche, in dem es im Betrieb einer höheren dielektrischen Belastung unterliegt als in anderen Bereichen, zur Erhöhung der Leitfähigkeit mit Beta- oder Gamma-Strahlung behandelt ist.

2. Isolierendes Bauteil nach Anspruch 1,
**dadurch gekennzeichnet , daß**
in dem wenigstens einen Bereich (10,16) die Leitfähigkeit bis zu einer Tiefe von wenigstens 5 mm signifikant erhöht ist.

3. Isolierendes Bauteil nach Anspruch 1 oder 2,
**dadurch gekennzeichnet , daß**
das Bauteil (9,18) aus PTFE besteht.

4. Verfahren zur Herstellung eines isolierenden Bauteils nach Anspruch 1 oder einem der folgenden,
**dadurch gekennzeichnet , daß**
das Bauteil (9,18) in dem wenigstens einen Bereich (10,16) mit Beta- oder Gamma-Strahlung behandelt wird.

5. Verfahren nach Anspruch 4,
**dadurch gekennzeichnet , daß**
das Bauteil wenigstens in dem einen Bereich der Einwirkung eines Lichtbogens ausgesetzt wird.

## Claims

1. Insulating component (9, 18), which is at least partially composed of a plastic, for high-voltage systems, in particular for use in gas-insulated systems, having increased conductivity in the region of its surface,
**characterized in that**
the material of the component (9, 18) is treated with beta or gamma radiation in order to increase the conductivity, at least in a region (10, 16) of its surface in which it is subject to higher dielectric loading during operation than in other regions.

2. Insulating component according to Claim 1,
**characterized in that**,
in the at least one region (10, 16), the conductivity is increased significantly to a depth of at least 5 mm.

3. Insulating component according to Claim 1 or 2,
**characterized in that**
the component (9, 18) is composed of PTFE.

4. Method for producing an insulating component according to Claim 1 or one of the following claims,
**characterized in that**
the component (9, 18) is treated with beta or gamma radiation in the at least one region (10, 16).

5. Method according to Claim 4,
**characterized in that**
the component is subjected to the influence of an arc, at least in the one region.

## Revendications

1. Composant (9,18) isolant, constitué au moins en partie en une matière plastique et destiné à des installations à haute tension, notamment à utiliser dans des installations à isolation par du gaz, ayant une conductivité augmentée dans la région de sa surface, **caractérisé en ce que** le matériau du composant (9,18) est, au moins dans une région (10,16) de sa surface, dans laquelle il est soumis en fonctionnement à une charge diélectrique plus grande que dans d'autres régions, traité par du rayonnement β ou par du rayonnement δ pour augmenter la conductivité.

2. Composant isolant suivant la revendication 1, **caractérisé en ce que** la conductivité dans la dite au moins une région (10,16) est augmentée significativement jusqu'à une profondeur d'au moins 5 mm.

3. Composant isolant suivant la revendication 1 ou 2, **caractérisé en ce que** le composant (9,18) est en PTFE.

4. Procédé de fabrication d'un composant isolant suivant la revendication 1 ou l'une des revendications suivantes, caractérisé en ce le composant (9,18) est traité dans ladite au moins une région (10,16) par du rayonnement **β** ou par du rayonnement δ.

5. Procédé suivant la revendication 4, **caractérisé en ce que** le composant est exposé au moins dans ladite une région à l'action d'un arc électrique.
